# EUROPEAN PATENT SPECIFICATION

(11) **EP 1 872 919 B1**
(45) Date of publication and mention of the grant of the patent: **29.04.2009**
(21) Application number: 07110831.0
(22) Date of filing: 22.06.2007
(51) Int. Cl.: B27C 9/04, B23Q 1/03, B25B 11/00

(54) **Machining centre for machining panels made of wood or the like**
Bearbeitungszentrum zur Bearbeitung von Platten aus Holz oder dergleichen
Centre d'usinage pour usiner des panneaux en bois ou similaire

(30) Priority: 26.06.2006 IT BO20060491
(43) Date of publication of application: 02.01.2008
(73) Proprietor: SCM Group S.p.A., 47900 Rimini (IT)
(72) Inventor: Neri, Alessandro, Viserba (Rimini) 47811 (IT)
(74) Representative: Lanzoni, Luciano

(56) References cited:
- EP-A- 0 566 770
- DE-A1- 10 350 572
- DE-A1- 10 358 100
- DE-C1- 4 337 739

## Description

This invention relates to a machining centre for machining panels made of wood or the like in accordance with the preamble of claim 1 (see for example EP-A-0 566 770).

Usually, these machining centres are used to perform different stock removal processes (routing, vertical and horizontal boring, cutting, etc.) on the panels.

Normally, a machining centre of this kind basically comprises the following:
- a work table on which the panel is held by suction means that generate a vacuum to hold the panel down;
- one or more machining units located above the work table and equipped with tools for machining the panel;
- a control unit that coordinates the movements of the work table and machining units relative to each other in such a way as to perform the programmed machining processes.

Depending on the type of machining centre, the work table and the machining units may be mobile relative to each other along the three principal axes (X, Y, Z) of movement and adjustment, controlled by the control unit.

This specification examines in particular the panel work table of these machining centres.

At present, there are two main kinds of work tables: "nesting" work tables (so called in the jargon of the trade) and "bar" work tables.

Usually, a nesting work table is one having a series of "hollows" or similar features, depending on machining requirements and the type of shapes to be obtained, and equipped with air valves that generate the vacuum used to hold down the workpiece.

On this table, it is possible to cut out the largest possible number of shape parts from an unworked panel thus optimizing (that is, minimizing) offcut waste.

In practice, the unworked panel, is held down on the work table by a vacuum with an interposed auxiliary table made of a breathable material (known in the jargon of the trade as "spoilboard"): this is necessary to avoid damage to the work table for example when the routing bit that makes the through cuts moves along the thickness of the workpiece.

The bar work table, on the other hand, consists of a series of transversal bars mounted slidably on longitudinal beams. Each bar has one or more vacuum hold-down units whose top surface forms the table that supports the panel to be worked. In this case, too, there is a vacuum system obtained by conduits running through the bars and leading out through the vacuum hold-down units generating a vacuum by which the panel is held down.

Usually, depending on the size of the initial panel and the work that has to be done to it, the bars can be adjusted for spacing along the main axis X of the machine, while the suction cup units can be slidably positioned on the respective bars along the axis Y transversal to the main axis X.

This type of vacuum hold down table enables the panel to "float" over the bars while different bits or cutting tools work the edges of the panel and, if the size of the panel allows, also part of its underside.

In short, each types of work table is used for a different purpose and, in many cases, both tables have to be used to complete work on the panels.

In other terms, the nesting table is used to obtain a large number of shaped parts from the unworked panels (usually in series) but the shaped parts must then be placed on bar tables if work has to be done to their edges: for example, routing or horizontal holes which cannot be done on the nesting table because there is not enough space between one shaped part and another.

Although there is no such problem on a bar work table, the latter has the disadvantage of limited productivity since it can be used for machining one panel at a time or, at most, two panels at a time which must be spaced quite far apart to prevent the machining units working on the edges of the panels from colliding.

In other words, the two types of work table have different operating characteristics and very often both have to be used to be able to process panels from start to finish.

This has two disadvantages, the first being the need to have two different machining centres (with obvious increases in cost) and the second the fact that machining centres with these two types of work table differ in productivity: high productivity in the case of nesting tables and lower productivity in the case of bar tables.

The aim of this invention is to overcome the above mentioned disadvantages by providing a machining centre for panels made of wood or the like, having a work table whose characteristics are such as to optimize cutting of the unworked panel and then allowing the shaped parts obtained to be worked around the edges immediately without moving the shaped parts from the work table.

In accordance with the invention, this aim is achieved by a machining centre, in particular a machining centre for panels made of wood or the like, comprising the technical characteristics defined in claim 1; preferred embodiments thereof are defined in the dependent claims.

The technical characteristics of the invention, are described in the detailed description which follows, with reference to the accompanying drawings which illustrate a preferred embodiment of the invention provided merely by way of example without restricting the scope of the claims, and in which:
- Figure 1 is a schematic plan view from above of a machining centre according to the invention for machining panels made of wood or the like;
- Figure 2 is a schematic side view of the machining centre of Figure 1;
- Figure 3 is a side view, with some parts cut away and others in cross section, showing a scaled up detail A from Figure 2;
- Figure 4 is a schematic view from B, with some parts cut away and others in cross section, showing the detail A of Figure 3.

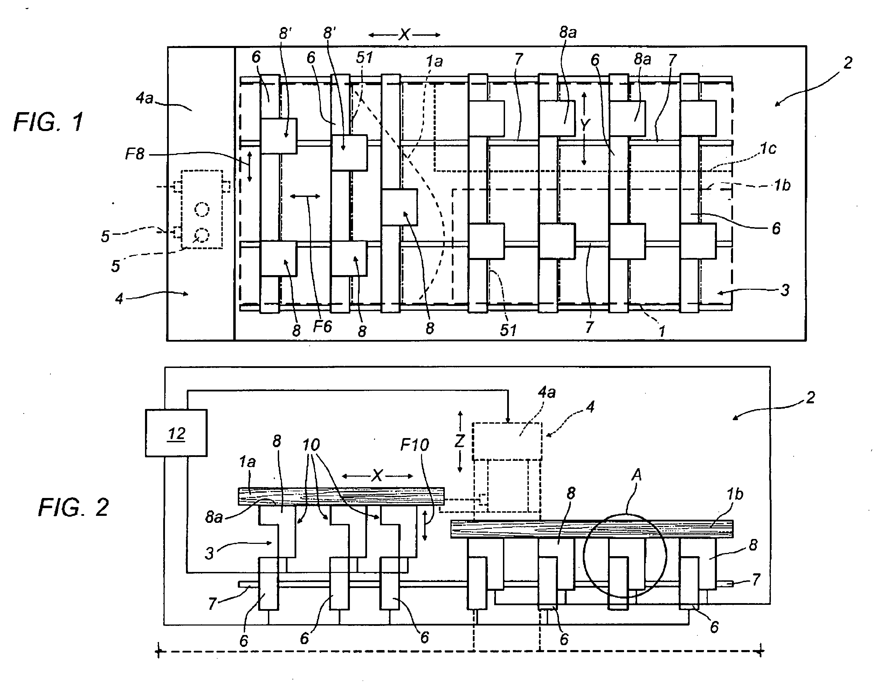

With reference to the accompanying drawings, in particular Figures 1 and 2, the machining centre according to the invention, labelled 2 in its entirety, is used for machining panels 1 made of wood or the like.

The machining centre 2 essentially comprises a work table 3 for supporting an unworked panel 1 and at least one machining unit 4 which move relative to each other.

In the non-limiting embodiment described by way of example, the machining unit 4 is mounted on a portal frame structure 4a, is mobile along the three main axes X, Y, Z and is equipped with tools 5 acting on the unworked panel 1 to make it into at least one machined workpiece 1a.

The work table 3 at least comprises:
- a plurality of bars 6 mounted on longitudinal beams 7;
- at least one vacuum hold-down unit 8 positioned on each bar 6 and whose top surface 8a forms the table that supports the panel 1;
- means 9 for generating a vacuum acting on each vacuum hold-down unit 8 in order to securely hold down the panel 1 to be machined.

In addition to the above, it may further comprise a main control unit 12 (illustrated as a block in the accompanying drawings) for controlling the machining centre 2 as a whole and acting at least on the machining unit 4.

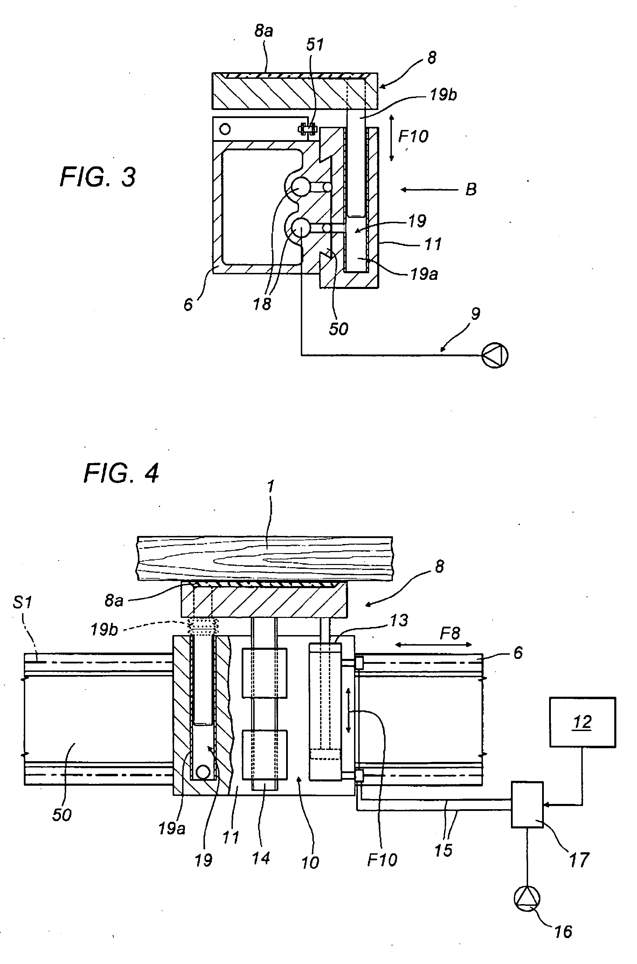

As illustrated in Figures 2 to 4, each vacuum hold-down unit 8 is equipped with means 10 for moving it along the third, vertical axis Z to adopt at least two stable configurations between a first, lowered position where the top surface 8a is close to the respective bar 6 (see Figures 3 and 4), and a raised position (see arrow F10), where the top surface 8a is away from the bar 6.

As clearly shown in Figure 1, each bar 6 may be equipped with at least two vacuum hold-down units 8, 8': in this case, each of the two vacuum hold-down units 8, 8' on each bar 6 is equipped with the aforementioned means 10 for moving it along the third vertical axis Z, said means acting, as mentioned above, on the respective top surface 8a forming the work table that supports the panel 1.

In particular, each bar 6 may be slidably mounted on the aforementioned parallel longitudinal beams 7 in such a way that the bars 6 can be positioned stably relative to each other along the first axis X of the machining centre 2 (see arrows F6): obviously, once adjusted, the bars 6 are locked securely in place.

Adjustment may be done manually by the user by sliding each bar 6 along the first axis X on the beams 7, or automatically by connecting automatic bar 6 movement systems (of known type and not illustrated) to the above mentioned control unit 12.

Similarly, each vacuum hold-down unit 8 may also be slidably mounted for adjustment along the respective bar 6, that is to say, along the second axis Y transversal to the first axis X (see arrows F8).

As shown also in Figures 3 and 4, each vacuum hold-down unit 8, 8' is slidably associated with the respective bar 6 on guides 50 and may be moved by a chain drive system 51.

In this case too, each vacuum hold-down unit 8, 8' may be slidably mounted for adjustment along the respective bar 6 which may be done manually by the user or automatically by connecting the drive system 51 directly to the control unit 12.

Returning now to the vertical movement means 10 (see Figures 3 and 4), these may be positioned on the vacuum hold-down unit 8, 8' itself and act on the top surface 8a forming the panel 1 supporting table.

Looking more closely at the constructional details, each vacuum hold-down unit 8, 8' may be comprised of a carriage 11, slidable along the respective bar 6, and of the top surface 8a: in this case, the vertical movement means 10 may be positioned on the carriage 11.

The means 10 for movement along the third, vertical axis Z are connected to the above mentioned control unit 12, which controls the movement means 10 themselves in such a way as to coordinate the movements of the top surfaces 8a of one or more vacuum hold-down units 8, 8', thus lifting or lowering the unworked panel 1 (or the shaped parts obtained from the unworked panel 1, as described in more detail below) according to the operating requirements of the machining unit 4.

In a construction example (without limiting the scope of the invention), the vertical movement means 10 may comprise:
- an actuating element 13 associated with the carriage 11 and connected to the control unit 12;
- a guide 14 slidably associated with the carriage 11 and integral with the top supporting surface 8a (defined by a rigid plate fitted with a top seal), in such a way as to enable the aforementioned movement between the two, lowered and raised, working positions of the top surface 8a.

The actuating element 13 may consist of a double acting air cylinder connected, through respective conduits 15, to a feed source 16 controlled, through valve means 17, by the control unit 12.

In another possible embodiment, the actuating element 13 may consist of a double acting hydraulic cylinder connected, again through respective conduits 15, to a feed source 16 controlled, again through valve means 17, by the control unit 12.

In view of the vertical movement of the surface 8a of the vacuum hold-down unit 8, 8', the connections of the vacuum generating means must also be adapted to the new configuration.

For this purpose, the aforementioned vacuum generating means 9 comprise connecting conduits 18 located on each bar 8 and at least one connecting branch 19 extending to the top supporting surface 8a.

As illustrated in Figures 3 and 4, the connecting branch 19 may be comprised of two half parts 19a, 19b, the first part 19a being located on the carriage 11 that mounts the vacuum hold-down unit 8, 8', and the second part 19b being associated with, and leading to, the top supporting surface 8a in such a way as to form a conduit that can be adjusted according to the aforementioned positions adopted by the top surface 8a.

In a first embodiment, the second part 19b of the branch 19 may be coaxially inserted in sealed manner into the first part 19a to form a telescoping conduit branch adaptable to the movements of the top surface 8a.

In a second embodiment (shown in Figure 4), the second part 19b of the branch 19 is a flexible hose that can be reduced in size (for example, in concertina fashion) and sealed to the top end of the first part 19a.

In practice, the work table 3 structured in this way enables machining of the panel 1 to be carried out as follows.

Once the unworked panel 1 has been positioned and is held securely in place (by vacuum) on the vacuum hold-down units 8, 8', the latter are raised by the control unit 12 which drives the movement means 10 in such a way as to lift the panel 1 well away from the bars 6 (see arrows F10).

At this point, the machining unit 4 can cut the panel 1 into shaped parts 1a, 1b, 1c (for example), as shown in Figure 2.

If one or more of these shaped parts 1a, 1b, 1c has to be worked further around the edges, the unit 12 lowers the vacuum hold-down units 8, 8' supporting the shaped parts that do not need to be worked at that stage (1b, 1c) and keeps the shaped part 1a in the raised position.

Thus, the machining unit 4 can approach the shaped part 1a and move down below the level of its edge without the risk of colliding with the other shaped parts (see Figure 2): this procedure can then be repeated on all the remaining shaped parts.

When all the parts have been worked as required, the vacuum hold-down units 8, 8' are all lowered so that the worked parts thus obtained can be removed.

A machining centre made in this way therefore fully achieves the above mentioned aims thanks to the special structure of the work table.

The possibility of selectively positioning the vacuum hold-down units along the vertical axis fulfils the twofold purpose of allowing the shaped parts to be cut out without the risk of the cutting tool coming into contact with the work table itself and allowing the edges of each shaped part to be worked in turn by selectively lifting the vacuum hold-down units one at a time while the others are lowered, according to a programmed sequence, without the risk of the machining unit colliding with the other shaped parts.

This double function of the work table therefore makes it possible to combine the high productivity of a "nesting" table with the versatility of a traditional bar work table: this combination makes the machining centre according to the invention extremely functional, highly productive and advantageously economical in the context of a production line because it allows two machining centres to be substituted with one machine centre without reducing productivity.

## Claims

1. A machining centre for panels (1) made of wood or the like, the machining centre (2) comprising a work table (3) for supporting an unworked panel (1) and at least one machining unit (4), which move relative to each other, the unit (4) being equipped with tools (5) acting on the unworked panel (1) to make it into at least one machined workpiece (1a); the work table (3) at least comprising:
- a plurality of bars (6) mounted on longitudinal beams (7), each bar (6) being slidably mounted on the parallel longitudinal beams (7) in such a way as to allow the bars (6) to be stably positioned relative to each other along a first axis (X);
- at least one vacuum hold-down unit (8) positioned on each bar (6) and whose top surface (8a) forms the table that supports the panel (1); said hold-down unit (8) being slidably mounted for adjustment along the respective bar (6), that is to say, along a second axis (Y) transversal to the first axis (X);
- means (9) for generating a vacuum acting on each vacuum hold-down unit (8) in order to securely hold down the panel (1), said means (9) for generating a vacuum having connecting conduits (18) located on each bar (6) and at least one connecting branch (19) extending to the top supporting surface (8a); each vacuum hold-down unit (8) being equipped with means (10) for moving it along the third, vertical axis (Z) to adopt at least two stable configurations between a first, lowered position where the top surface (8a) is close to the respective bar (6), and a raised position, where the top surface (8a) is away from the bar (6);
the machining centre being **characterized in that** the connecting branch (19) is comprised of two half-parts (19a, 19b), the first (19a) being located on a carriage (11) that mounts the vacuum hold-down unit (8), and the second (19b) being associated with, and leading to, the top supporting surface (8a) in such a way as to form a conduit that can be adjusted according to the aforementioned positions adopted by the top surface (8a); the second part (19b) of the branch (19) being coaxially inserted in sealed tanner into the first part (19a) to form a telescoping conduit branch.

2. The machining centre according to claim 1, **characterised in that** the vertical movement means (10) are located on the vacuum hold-down unit (8) and act at least on the top surface (8a) forming the table that supports the panel (1).

3. The machining centre according to claim 1, **characterised in that** each bar (6) has at least two vacuum hold-down units (8, 8'), whereby each of the two vacuum hold-down units (8, 8') on each bar (6) is equipped with the means (10) for moving it along the third, vertical axis (Z) and acting at least on the top surface (8a) forming the table that supports the panel (1).

4. The machining centre according to claim 1 , **characterised in that** said carriage (11) is slidable along the respective bar (6) and the vertical movement means (10) are located on said carriage (11).

5. The machining centre according to claim 1, including a main control unit (12) acting at least on the machining unit (4), **characterised in that** the control unit (12) is connected to and controls the movement means (10) in the third, vertical axis (Z) in such a way as to coordinate the movements of the top surfaces (8a) of one or more of the vacuum hold-down units (8) to lift or lower at least one panel (1) according to the working requirements of the machining unit (4).

6. The machining centre according to claims 1 to 4, **characterised in that** the vertical movement means (10) comprise:
- an actuating element (13) associated with the carriage (11) and connected to the control unit (12) ;
- a guide (14) slidably associated with the carriage (11) and integral with the top supporting surface (8a), in such a way as to enable the movement between the two, lowered and raised, working positions of the top surface (8a).

7. The machining centre according to claim 6, **characterised in that** the actuating element (13) is a double acting air cylinder connected, through respective conduits (15), to a feed source (16) controlled, through valve means (17), by the control unit (12).

8. The machining centre according to claim 6, **characterised in that** the actuating element (13) is a double acting hydraulic cylinder connected, through respective conduits (15), to a feed source (16) controlled, through valve means (17), by the control unit (12).

9. The machining centre according to any of the foregoing claims, **characterised in that** each bar (6) can be adjusted in the first axis (X) by sliding it manually along the beams (7).

10. The machining centre according to any of the foregoing claims, **characterised in that** each bar (6) is controlled by the control unit (12) in such a way that it can be positioned automatically by sliding it along the beams (7) in the first axis (X).

11. The machining centre according to any of the foregoing claims, **characterised in that** each vacuum hold-down unit (8, 8') is controlled by the control unit (12) in such a way that it can be adjusted automatically by positioning it along the bar (6) in the second axis (Y).

12. The machining centre according to any of the foregoing claims, **characterised in that** each vacuum hold-down unit (8, 8') is slidably mounted so that it can be adjusted manually by sliding it along the bar (6) in the second axis (Y).

## Patentansprüche

1. Bearbeitungszentrum für Platten (1) aus Holz oder dergleichen, das Bearbeitungszentrum (2) bestehend aus einem Arbeitstisch (3) zur Auflage einer unbearbeiteten Platte (1) und zumindest einer Bearbeitungseinheit (4), die sich relativ zueinander bewegen, wobei die Einheit (4) mit Werkzeugen (5) ausgerüstet ist, die auf die unbearbeitete Platte (1) einwirken, um daraus zumindest ein bearbeitetes Werkstück (1a) zu fertigen; wobei der Arbeitstisch (3) zumindest Folgendes beinhaltet:
- mehrere Stangen (6), die auf Längsbalken (7) montiert sind, wobei jede Stange (6) gleitbar auf den parallelen Längsbalken (7) derart montiert ist, dass es möglich ist, die Stangen (6) in stabiler Position relativ zueinander entlang einer ersten Achse (X) anzuordnen;
- zumindest eine Vakuum-Niederhaltereinheit (8), die auf jeder Stange (6) angeordnet ist und deren obere Oberfläche (8a) den Auflagetisch für die Platte bildet (1); wobei diese Niederhaltereinheit (8) gleitbar montiert ist, um die Einstellung entlang der entsprechenden Stange (6) zu ermöglichen, das heißt entlang einer zweiten Achse (Y), die quer zu der ersten Achse (X) ausgerichtet ist;
- Mittel (9) zum Erzeugen eines Unterdrucks, die auf jede Vakuum-Niederhaltereinheit (8) wirken, um die Platte (1) sicher nach unten festzuhalten, wobei diese Mittel (9) zum Erzeugen eines Unterdrucks auf jeder Stange (6) angeordnete Anschlussleitungen (18) sowie zumindest eine, sich zu der oberen Auflageoberfläche (8a) hin erstreckende Anschlussabzweigung (19) aufweisen; wobei jede Vakuum-Niederhaltereinheit (8) mit Mitteln (10) für ihre Bewegung entlang einer dritten, vertikalen Achse (Z) ausgestattet ist, um zumindest zwei stabile Konfigurationen einnehmen zu können, die bestimmt sind durch eine erste, untere Stellung, in der die obere Oberfläche (8a) der entsprechenden Stange (6) angenähert ist, und eine angehobene Stellung, in der die obere Oberfläche (8a) von der Stange (6) entfernt ist;
worin das Bearbeitungszentrum **dadurch gekennzeichnet ist, dass** die Anschlussabzweigung (19) aus zwei Halbteilen (19a, 19b) besteht, von denen das erste (19a) auf einem Wagen (11) angeordnet ist, der die Vakuum-Niederhaltereinheit (8) trägt, und das zweite (19b) mit der oberen Auflageoberfläche (8a) derart verbunden ist und in diese mündet, dass eine Leitung gebildet wird, die in Abhängigkeit von den oben genannten Stellungen, welche die obere Oberfläche (8a) einnehmen kann, regulierbar ist; wobei das zweite Halbteil (19b) der Abzweigung (19) koaxial und abdichtend in das erste Halbteil (19a) eingeführt ist, um eine teleskopartige Leitungsabzweigung zu bilden.

2. Bearbeitungszentrum nach Anspruch 1, **dadurch gekennzeichnet, dass** die vertikalen Bewegungsmittel (10) auf der Vakuum-Niederhaltereinheit (8) angeordnet sind und zumindest auf die obere Oberfläche (8a) wirken, um den Auflagetisch für die Platte (1) zu bilden.

3. Bearbeitungszentrum nach Anspruch 1, **dadurch gekennzeichnet, dass** jede Stange (6) zumindest zwei Vakuum-Niederhaltereinheiten (8, 8') aufweist, wobei jede der zwei Vakuum-Niederhaltereinheiten (8, 8') auf jeder Stange (6) mit den Mitteln (10) ausgestattet ist, die für deren Bewegung entlang der dritten, vertikalen Achse (Z) dienen und zumindest auf die obere Oberfläche (8a) wirken, um den Auflagetisch für die Platte (1) zu bilden.

4. Bearbeitungszentrum nach den Ansprüchen 1, **dadurch gekennzeichnet, dass** der Wagen (11) entlang der entsprechenden Stange (6) gleiten kann und dass die vertikalen Bewegungsmittel (10) auf dem Wagen (11) angeordnet sind.

5. Bearbeitungszentrum nach Anspruch 1, das eine Hauptsteuereinheit (12) beinhaltet, die zumindest auf die Bearbeitungseinheit (4) wirkt, **dadurch gekennzeichnet, dass** die Steuereinheit (12) mit den Bewegungsmitteln (10) verbunden ist und diese in der dritten, vertikalen Achse (Z) derart steuert, dass sie die Bewegungen der oberen Oberflächen (8a) von einer oder mehreren der Vakuum-Niederhaltereinheiten (8) so koordiniert, dass zumindest eine Platte (1) entsprechend der Arbeitserfordernisse der Bearbeitungseinheit (4) angehoben oder abgesenkt wird.

6. Bearbeitungszentrum nach den Ansprüchen 1 bis 4, **dadurch gekennzeichnet, dass** die vertikalen Bewegungsmittel (10) Folgendes beinhalten:
- ein Betätigungselement (13), das mit dem Wagen (11) verbunden und an die Steuereinheit (12) angeschlossen ist;
- eine Führung (14), die gleitbar mit dem Wagen (11) verbunden und einteilig mit der oberen Auflageoberfläche (8a) ausgeführt ist, um die Bewegung zwischen den zwei Stellungen, das heißt der unteren und oberen Arbeitsstellung, der oberen Oberfläche (8a) zu ermöglichen.

7. Bearbeitungszentrum nach Anspruch 6, **dadurch gekennzeichnet, dass** das Betätigungselement (13) ein doppeltwirkender Luftzylinder ist, der über entsprechende Leitungen (15) mit einer Zufuhrquelle (16) verbunden ist, die über Ventileinrichtungen (17) von der Steuereinheit (12) gesteuert wird.

8. Bearbeitungszentrum nach Anspruch 6, **dadurch gekennzeichnet, dass** das Betätigungselement (13) ein doppeltwirkender Hydraulikzylinder ist, der über entsprechende Leitungen (15) mit einer Zufuhrquelle (16) verbunden ist, die über Ventileinrichtungen (17) von der Steuereinheit (12) gesteuert wird.

9. Bearbeitungszentrum nach einem der vorgehenden Ansprüche, **dadurch gekennzeichnet, dass** jede Stange (6) auf der ersten Achse (X) durch manuelles Verschieben entlang der Balken (7) einstellbar ist.

10. Bearbeitungszentrum nach einem der vorgehenden Ansprüche, **dadurch gekennzeichnet, dass** jede Stange (6) von der Steuereinheit (12) derart angesteuert wird, dass sie automatisch durch Verschieben entlang der Balken (7) auf der ersten Achse (X) positioniert werden kann.

11. Bearbeitungszentrum nach einem der vorgehenden Ansprüche, **dadurch gekennzeichnet, dass** jede Vakuum-Niederhaltereinheit (8, 8') von der Steuereinheit (12) derart angesteuert wird, dass sie automatisch durch Positionierung entlang der Stange (6) auf der zweiten Achse (Y) einstellbar ist.

12. Bearbeitungszentrum nach einem der vorgehenden Ansprüche, **dadurch gekennzeichnet, dass** jede Vakuum-Niederhaltereinheit (8, 8') gleitbar derart montiert ist, dass sie manuell durch Verschieben entlang der Stange (6) auf der zweiten Achse (Y) einstellbar ist.

## Revendications

1. Un centre d'usinage pour des panneaux (1) en bois ou similaire, tel centre d'usinage (2) comprenant une table d'usinage (3) pour le support d'un panneau brut (1) et au moins un groupe d'usinage (4), qui sont mobiles l'un par rapport à l'autre, le groupe (4) étant équipé d'outils (5) agissant sur le panneau brut (1) pour le transformer en au moins une pièce usinée (1a) ; la table d'usinage (3) comprenant au moins :
- une pluralité de barres (6) montées sur des poutres longitudinales (7), chaque barre (6) étant montée de façon coulissante sur les poutres longitudinales (7) parallèles de manière à permettre un positionnement relatif stable des barres (6) les unes par rapport aux autres le long d'un premier axe (X) ;
- au moins un groupe (8) de maintien par le vide, placé sur chaque barre (6) et dont une surface (8a) supérieure définit la table de support du panneau (1) ; ledit groupe de maintien (8) étant monté de façon coulissante pour pouvoir être réglé le long de la barre (6) respective, c'est-à-dire le long d'un deuxième axe (Y) transversal au premier axe (X) ;
- des moyens (9) de génération de vide, agissant sur chaque groupe (8) de maintien par le vide afin d'immobiliser de façon sûre le panneau (1), lesdits moyens (9) de génération de vide comprenant des conduits de raccordement (18) situés sur chaque barre (6) et au moins une branche de raccordement (19) s'étendant jusqu'à la surface supérieure (8a) de support ; chaque groupe (8) de maintien par le vide étant équipé de moyens (10) destinés à le déplacer le long d'un troisième axe (Z) vertical pour lui faire prendre au moins deux configurations stables entre une première position basse dans laquelle la surface supérieure (8a) est à proximité de la barre (6) respective, et une position haute dans laquelle la surface supérieure (8a) est éloignée de la barre (6) ;
le centre d'usinage étant **caractérisé en ce que** la branche de raccordement (19) comprend deux demi-parties (19a, 19b), la première (19a) étant située sur un chariot (11) qui supporte le groupe (8) de maintien par le vide, et la deuxième (19b) étant associée à et débouchant au niveau de la surface supérieure (8a) de support, de manière à former un conduit qui peut être réglé en fonction des positions susmentionnées prises par la surface supérieure (8a) ; la deuxième partie (19b) de la branche (19) étant coaxialement introduite, de façon étanche, dans la première partie (19a) afin de former une branche de conduit télescopique.

2. Le centre d'usinage selon la revendication 1, **caractérisé en ce que** les moyens (10) de déplacement vertical sont situés sur le groupe (8) de maintien par le vide et agissent au moins sur la surface supérieure (8a) définissant la table de support du panneau (1).

3. Le centre d'usinage selon la revendication 1, **caractérisé en ce que** chaque barre (6) est dotée d'au moins deux groupes (8, 8') de maintien par le vide, où chacun des deux groupes (8, 8') de maintien par le vide de chaque barre (6) est équipé des moyens (10) destinés à le déplacer le long du troisième axe (Z) vertical et agissant au moins sur la surface supérieure (8a) définissant la table de support du panneau (1).

4. Le centre d'usinage selon la revendication 1, **caractérisé en ce que** ledit chariot (11) peut coulisser le long de la barre (6) respective et les moyens (10) de déplacement vertical sont situés sur ledit chariot (11).

5. Le centre d'usinage selon la revendication 1, comprenant une unité de contrôle maître (12) agissant au moins sur le groupe d'usinage (4), **caractérisé en ce que** l'unité de contrôle (12) est reliée à et commande les moyens (10) de déplacement le long du troisième axe (Z) vertical de manière à coordonner les déplacements des surfaces supérieures (8a) d'un ou de plusieurs des groupes (8) de maintien par le vide afin de soulever ou d'abaisser au moins un panneau (1) selon les exigences d'usinage du groupe d'usinage (4).

6. Le centre d'usinage selon les revendications de 1 à 4, **caractérisé en ce que** les moyens (10) de déplacement vertical comprennent :
- un élément d'actionnement (13) associé au chariot (11) et relié à l'unité de contrôle (12) ;
- un guide (14) associé de façon coulissante au chariot (11) et solidaire de la surface supérieure (8a) de support, de manière à permettre le déplacement entre les deux positions de travail, basse et haute, de ladite surface supérieure (8a).

7. Le centre d'usinage selon la revendication 6, **caractérisé en ce que** l'élément d'actionnement (13) est un vérin pneumatique à double effet relié, par l'intermédiaire de conduits (15) respectifs, à une source d'alimentation (16) asservie, par l'intermédiaire de moyens à vanne (17), à l'unité de contrôle (12).

8. Le centre d'usinage selon la revendication 6, **caractérisé en ce que** l'élément d'actionnement (13) est un vérin hydraulique à double effet relié, par l'intermédiaire de conduits (15) respectifs, à une source d'alimentation (16) asservie, par l'intermédiaire de moyens à vanne (17), à l'unité de contrôle (12).

9. Le centre d'usinage selon l'une quelconque des revendications précédentes, **caractérisé en ce que** chaque barre (6) peut être réglée le long du premier axe (X) en la faisant coulisser manuellement le long des poutres (7).

10. Le centre d'usinage selon l'une quelconque des revendications précédentes, **caractérisé en ce que** chaque barre (6) est asservie à l'unité de contrôle (12) de manière à pouvoir être positionnée automatiquement par coulissement sur les poutres (7) le long du premier axe (X).

11. Le centre d'usinage selon l'une quelconque des revendications précédentes, **caractérisé en ce que** chaque groupe (8, 8') de maintien par le vide est asservi à l'unité de contrôle (12) de manière à pouvoir être réglé automatiquement par positionnement sur la barre (6) le long du deuxième axe (Y).

12. Le centre d'usinage selon l'une quelconque des revendications précédentes, **caractérisé en ce que** chaque groupe (8, 8') de maintien par le vide est monté de façon coulissante de manière à pouvoir être réglé manuellement par coulissement sur la barre (6) le long du deuxième axe (Y).
